# EUROPEAN PATENT SPECIFICATION

(11) **EP 0 681 888 B1**
(45) Date of publication and mention of the grant of the patent: **26.03.1997**
(21) Application number: 94114627.6
(22) Date of filing: 16.09.1994
(51) Int. Cl.: B23Q 1/66

(54) **A table replacement apparatus in a numerical control router**
Wechseltischvorrichtung in einer NC-Fräsmaschine
Dispositif de table d'échange dans une fraise à commande numérique

(30) Priority: 14.05.1994 JP 124512/94
(43) Date of publication of application: 15.11.1995
(73) Proprietor: HEIAN CORPORATION, Hamamatsu-shi, Shizuoka-ken (JP)
(72) Inventor: Yamauchi, Yoshiyuki, c/o Heian Corporation, Hamamatsu-shi, Shizuoka-ken (JP)
(74) Representative: Kirschner, Klaus Dieter, Dipl.-Phys.

(56) References cited:
- EP-A- 0 457 104
- EP-A- 0 490 020
- DE-U- 8 807 313
- US-A- 4 797 991
- US-A- 4 949 942

## Description

### BACKGROUND OF THE INVENTION:

The present invention relates to a table replacing apparatus in a numerical control router having rule in which two tables are replaced each other.

In the prior numerical control router, one or more head constitution bodies are mounted to move by a rail attached to a base and one table is mounted to move by two rails attached to the base at right angles to the above one rail. A process board is positioned on the table and is processed by the numerical control router. When the process of the process board is terminated, the process board is removed from the table and the next process board is positioned on the table and is processed by the same process of manufacture or by the other one.

In such a numerical control router, because the table for processing the process board is single and the process board is removed from and positioned on the table always when the process of the process board is terminated. Therefore, the time for removing the board from and positioning it to the table is wasteful and time for processing the process board becomes long.

The US-Patent-A-4,949,942 discloses a table exchanging device for a wood working machine wherein workpieces of wood can be individually attracted and fixed by a sucking action by vacuum. The device comprises a pair of hollow slide table, each having an air chamber, a hollow bracket, a hollow tubular shaft, a first hollow arm, a second hollow arm and a shaft for connecting a free end portion of each of the first hollow arms to a free end portion of the corresponding second hollow arm. This apparatus does not comprise a head structure having a main motor with a rotary shaft for fixing a cutting or drilling tool, two tables which are movably mounted on table frames, chains connected to the ends of the first and the second table, chains supporting gears, rising and falling cylinders as in the present invention.

It is, therefore, the primary object of the present invention to provide a table replacing apparatus in a numerical control router in which two table are replaced each other and removing and positioning times become short.

It is another object of the present invention to provide a table replacing apparatus in a numerical control router in which a next process board is positioned on a second table, while a process board is processed by the numerical control router.

In order to accomplish the above and other objects, the present invention comprises a head structure having a main motor with a rotary shaft for fixing a cutting or drilling tool, the head structure being moved on head rails attached to the side of a rail member which is mounted on the upper part of a bed, the first table movably mounted on table frames, the second table supported by two table supporting members supported movably by respective insides of the table frames, chains respectively connected to the ends of the first and second table, chain supporting gears for supporting the chains and which are mounted at the ends of the table frames, a table moving means for moving the first and second table each other in opposite direction, and rising and falling cylinders for moving up and down the second table in the start position of the first table.

### BRIEF DESCRIPTION OF THE DRAWINGS:

Fig. 1 shows a plane view of a table replacing apparatus in a numerical control router according to the present invention.

Fig. 2 shows a side view of a table replacing apparatus in a numerical control router in Fig. 1.

Fig. 3 shows a side view of a table replacing apparatus in a numerical control router in Fig. 1.

Fig. 4 shows a plane view of the first and second table in Fig. 1.

Fig. 5 shows a front view of the first and second table in Fig. 1.

Fig. 6 shows a side sectional view of the first and second table in Fig. 1.

Fig. 7 shows a side sectional view of the first and second table in the other embodiment according to the present invention.

### DESCRIPTION OF THE PREFERRED EMBODIMENTS:

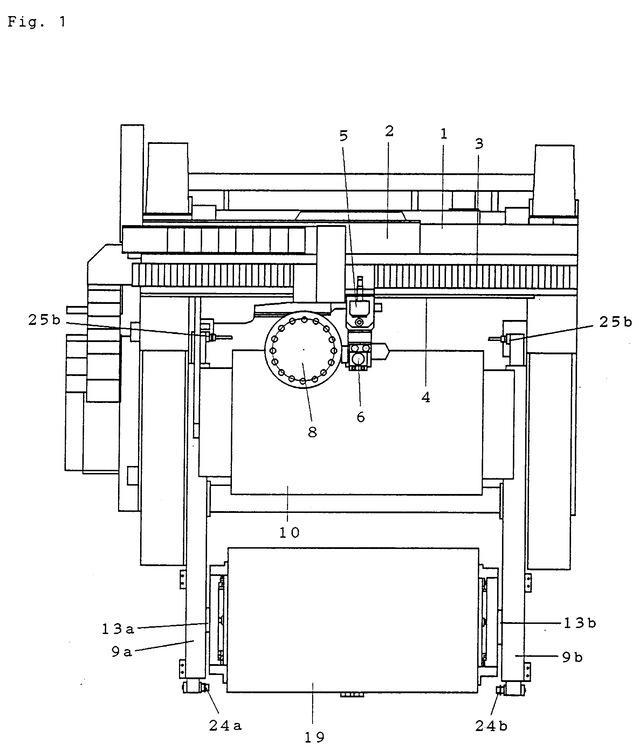

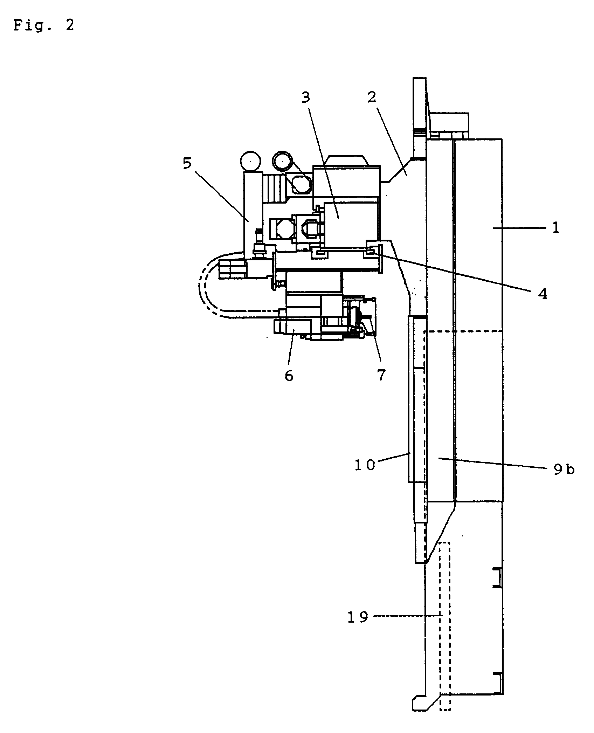

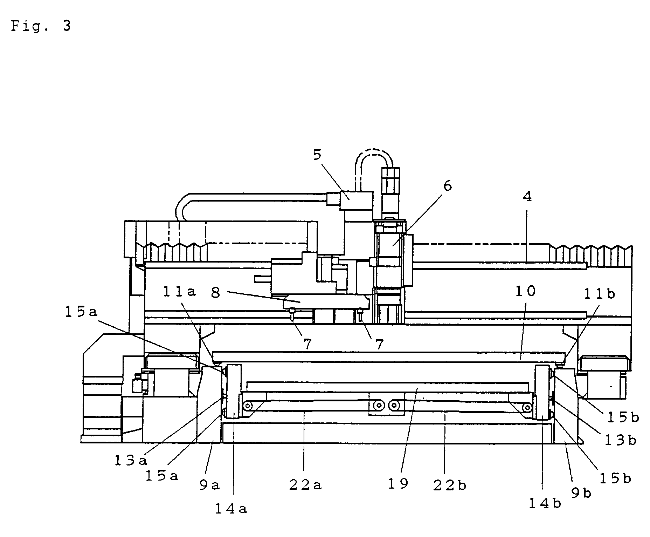

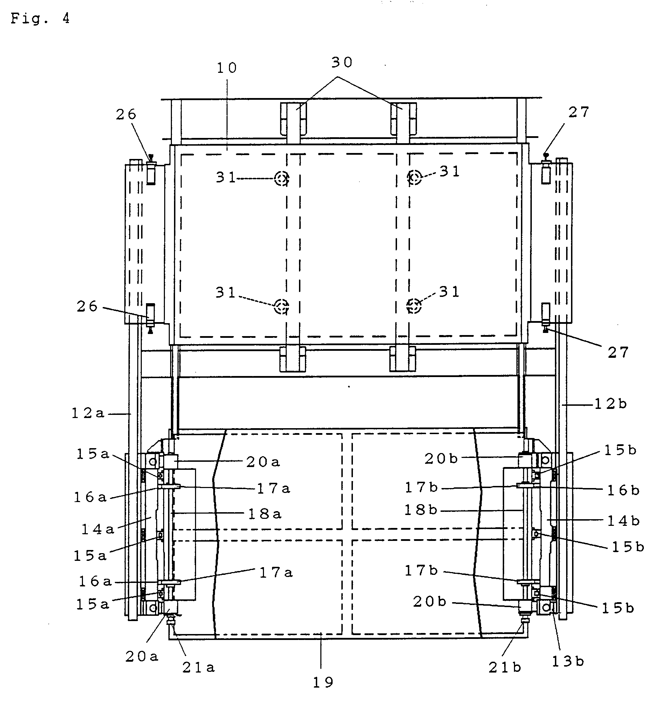

In a numerical control router in Figs. 1, 2, 3, 4, 5 and 6, supporting constitution 2 is fixed to a bed 1, a rail member 3 is fixed to the upper portion of the supporting construction 2 and head rails 4 are attached to the side of the rail member 3. A head structure 5 is mounted on the rail member 3 to move by the head rails 4. A cutting or drilling tool 7 is attached to a main motor 6 and a tool changing device 8 having plural tools 7 is provided with the head constitution 5 near the main motor 6.

Table frames 9a and 9b are mounted on both sides of the bed 1 and a first table 10 is mounted to move on table rails attached to the upper portion of the table frames 9a and 9b by rollers 11a and 11b. Also, cylinders 12a and 12b are mounted at middle portions of the table frames 9a and 9b respectively. Table supporting members 14a and 14b are connected to driving members 13a and 13b of the cylinders 12a and 12b to move by rollers 15a and 15b.

Racks 16a and 16b are perpendicularly attached to the table supporting members 14a and 14b, gears 17a and 17b are fixed rotary shafts 18a and 18b which are rotatably supported with bearings 20a and 20b attached with the both sides of a second table. Gears 21a and 21b are fixed at the ends of the rotary shafts 18a and 18b, gears 23a and 23b are attached below the second table 19 and are engaged with each other, and chains 22a and 22b are suspended between the gears 21a and 23a and 21b and 23b respectively.

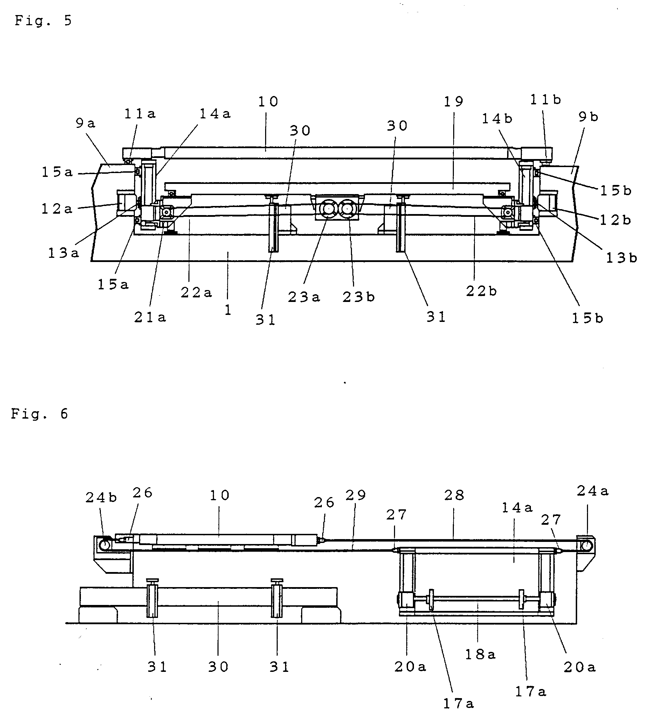

As shown in Fig. 6, chain supporting gears 24a and 25a and 24b and 25b are attached to the both ends of the table frames 9a and 9b respectively. The ends of chains 28 and 29 are fixed chain fixing members 26 and 27 and fixed both ends of the first and second table 10 and 19 are respectively suspended by the chain supporting gears 24a and 25a and 24b and 25b. Cylinder frames 30 are fixed below the first table 9 and rising and falling cylinders 31 for rising or falling the second table 19 are fixed at cylinder frames 30.

In the table replacing apparatus in accordance with the present invention, when the driving members 13a and 13b are driven by the cylinders 12a and 12b, the first and second table 10 and 19 are moved each other in opposite direction by drawing the chains 28 and 29. When the second table 19 is moved to the position of the first table 10, the second table 19 can be risen to the height of the first table 10 by the rising and falling cylinders 31.

When the second table 19 is risen, the gears 17a and 17b are respectively engaged with the racks 16a and 16b which are respectively fixed at the table supporting members 14a and 14b and are rotated with the rotary shafts 18a and 18b, whereby the chains 22a and 22b are drawn and the gears 23a and 23b are rotated by engaging with each other. Accordingly, the second table is risen and fallen by horizontally holding.

In the present embodiment according to the present invention, as explained in the above, because the first table 10 can be replaced by the second table 19, when a process board is processed on the first table, the next process board can be positioned on the second table 19. After the process of the process board on the first table 10 has been terminated, the first and second tables 10 and 19 are moved each other in opposite side, whereby the second table 19 is risen to same height as the first table 10 in the original position of the first table 10 by the rising and falling cylinders 31. Then, the treated process board is removed from the first table 10 and the next process board can be positioned on the first table 10 while the next process board on the second table 19 is processed.

Therefore, time for positioning and removing a process board on the first and second table 10 and 19 is shortened and a process work becomes very smooth.

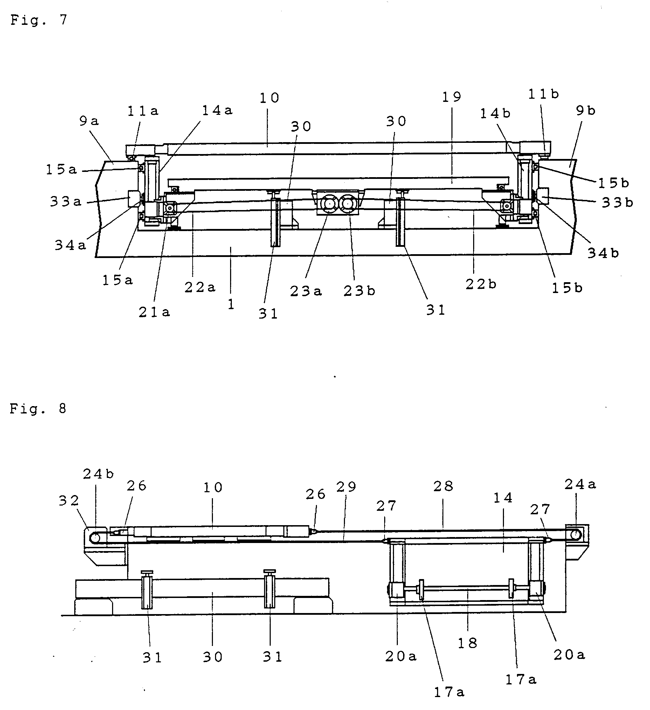

Referring Figs. 7 and 8, 10 designates a first table, 19; a second table, 11a, 11b, 15a and 15b designate rollers, 14a and 14b; table supporting members, 17a and 17b; gears, 18a and 18b; rotary shafts, 20a and 20b; bearings, 21a and 21b; gears, 22a and 22b; chains, 23a and 23b; gears, 24a, 24b, 25a and 25b; chain supporting gears, 26 and 27; chain fixing members, 28 and 29; chains, 30; cylinder frames, and 31; rising and falling cylinder, and because these constitutions are same as the above embodiment, the explanation of these constitutions are omitted. In the present embodiment, the chain supporting gears 24b and 25b are fixed the rotary shafts of servomotors 32 and the chains 29 are moved by the servomotors 32. Also, guides 33a and 33b are provided with the table frames 9a and 9b and guide driving members 34a and 34b attached to the table supporting members 14a and 14b. Thereby the first and second tables 10 and 19 are replaced by the servomotors 32.

As stated above, in the table replacing apparatus in a numerical control router according to the present invention, because the first and second tables can be replaced each other, the next process board is positioned on the second table while a process board on the first table is processed. Also, after the process of the process board on the first table is terminated, the second table is moved below the original position of the first table and the first table is moved the upper position of the start position of the second table. Then the second table is risen the height of the first table by the rising and falling cylinders and the treated process board is removed from the first table and the next process board is positioned on the first table. Therefore, time for positioning and removing is shortened and a process work becomes very smooth.

## Claims

1. A table replacing apparatus in a numerical control router comprising two tables, **characterized by**
a head structure (5) having a main motor (6) with a rotary shaft for fixing a cutting or drilling tool (7), the head structure (5) being moved on head rails (4) attached to the side of a rail member (3) which is mounted on the upper part of a bed (1), the first table (10) movably mounted on table frames (9a,9b), the second table (19) supported by two table supporting members (14a,14b) supported movably by respective insides of the table frames (9a,9b), chains (28,29) respectively connected to the ends of the first and second table (10,19), chain supporting gears (24a,25a,24b,25b) for supporting the chains and which are mounted at the ends of the table frames (9a,9b), a table moving means (12a,12b,13a,13b) for moving the first and second table (10,19) each other in opposite direction, and rising and falling cylinders (31) for moving up and down the second table (19) in the start position of the first table (10).

2. A table replacement apparatus in a numerical control router according to claim 1 wherein the table moving means comprises cylinders attached to the table frames (9a,9b).

3. A table replacement apparatus in a numerical control router as set forth in claim 1 wherein the table moving means comprise servomotors (32) for moving chains (29) connected to the first and second table (10,19), the servomotor (32) being attached on the table frames (9a,9b).

## Patentansprüche

1. Wechseltischvorrichtung in einer NC-Fräsmaschine, die zwei Tische umfaßt,
**gekennzeichnet durch**
einen Kopfaufbau (5), der einen Hauptmotor (6) mit einer Drehwelle zum Fixieren eines Schneide- oder Bohrwerkzeuges (7) hat, wobei der Kopfaufbau (5) auf Kopfschienen (4) bewegt wird, die mit der Seite eines Schienenteiles (3) verbunden sind, welches auf dem oberen Teil eines Gestelles (1) befestigt ist, den ersten Tisch (10), der beweglich auf den Tischrahmen (9a, 9b) befestigt ist, den zweiten Tisch (19), der durch zwei Tischtrageteile (14a, 14b), die beweglich durch die jeweiligen Innenseiten der Tischrahmen (9a, 9b) getragen werden, getragen wird, den Ketten (28, 29), die jeweils mit den Enden des ersten und zweiten Tisches (10, 19) verbunden sind, den Kettentragerädern (24a, 25a, 24b, 25b) zum Tragen der Ketten und welche mit den Enden der Tischrahmen (9a, 9b) befestigt sind, einer Tischbewegungseinrichtung (12a, 12b, 13a, 13b) zum Bewegen des ersten und zweiten Tisches (10, 19) jeweils in entgegengesetzter Richtung, und Hebel- und Absenkzylindern (31) zum Aufwärts- und Abwärtsbewegen des zweiten Tisches (19) in die Startposition des ersten Tisches (10).

2. Wechseltischvorrichtung in einer NC-Fräsmaschine nach Anspruch 1, worin die Tischbewegungseinrichtung Zylinder umfaßt, die mit den Tischrahmen (9a, 9b) verbunden sind.

3. Wechseltischvorrichtung in einer NC-Fräsmaschine nach Anspruch 1, worin die Tischbewegungseinrichtung Servomotoren (32) zum Bewegen der Ketten (29), die mit dem ersten und zweiten Tisch (10, 19) verbunden sind, umfaßt, wobei der Servomotor (32) mit den Tischrahmen (9a, 9b) verbunden ist.

## Revendications

1. Dispositif d'échange de tables dans une fraiseuse à commande numérique comportant deux tables, **caractérisé par** une structure de tête (5) ayant un moteur principal (6) avec un arbre rotatif pour fixer un outil de coupe ou de perçage (7), la structure de tête (5) se déplaçant sur des rails (4) de tête fixés du côté d'un élément (3) sur rails qui est monté sur la partie supérieure d'un banc (1), la première table (10) montée de manière à pouvoir se déplacer sur des bâtis (9a,9b) de table, la seconde table (19) supportée par deux éléments (14a,14b) de support de table supportée de manière à pouvoir se déplacer par les faces internes respectives des bâtis (9a,9b) de table, des chaînes (28, 29) respectivement reliées aux extrémités des première et seconde tables (10,19), des pignons (24a,25a,24b,25b) de support de chaînes pour supporter les chaînes et qui sont montés aux extrémités des bâtis (9a,9b) de table, des moyens (12a,12b,13a,13b) de déplacement de tables pour déplacer les première et seconde tables (10,19) dans des directions mutuellement opposées, et des vérins d'élévation et d'abaissement (31) pour élever et abaisser la seconde table dans la position de départ de la première table (10).

2. Dispositif d'échange de tables dans une fraiseuse à commande numérique selon la revendication 1, dans lequel les moyens de déplacement de tables comprennent des vérins fixés aux bâtis (9a,9b) de table.

3. Dispositif d'échange de tables dans une fraiseuse à commande numérique selon la revendication 1, dans lequel les moyens de déplacement de tables comprennent des servomoteurs (32) pour actionner des chaînes (29) reliées aux première et seconde tables (10,19), le servomoteur (32) étant fixé aux bâtis (9a, 9b) de table.
